(19) Europäisches Patentamt
European Patent Office
Office européen des brevets

(11) **EP 4 310 861 B1**

(12) **FASCICULE DE BREVET EUROPEEN**

(45) Date de publication et mention
de la délivrance du brevet:
**12.02.2025 Bulletin 2025/07**

(21) Numéro de dépôt: **23186163.4**

(22) Date de dépôt: **18.07.2023**

(51) Classification Internationale des Brevets (IPC):
**G21C 17/022** (2006.01)    **G21D 1/00** (2006.01)
**C23C 22/68** (2006.01)

(52) Classification Coopérative des Brevets (CPC):
**G21C 17/0225; G21D 1/006;** Y02E 30/30

(54) **PROCÉDÉ AMÉLIORÉ DE TRAITEMENT D'UNE PIÈCE MÉTALLIQUE D'UN CIRCUIT PRIMAIRE D'UN RÉACTEUR NUCLÉAIRE REFROIDI PAR EAU**

VERBESSERTES VERFAHREN ZUR BEHANDLUNG EINES METALLISCHEN TEILS EINES PRIMÄRKREISLAUFS EINES WASSERGEKÜHLTEN KERNREAKTORS

IMPROVED METHOD FOR TREATING A METAL PART OF A PRIMARY CIRCUIT OF A WATER-COOLED NUCLEAR REACTOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **20.07.2022 FR 2207411**

(43) Date de publication de la demande:
**24.01.2024 Bulletin 2024/04**

(73) Titulaire: **Commissariat à l'Energie Atomique et aux Energies Alternatives**
**75015 Paris (FR)**

(72) Inventeur: **YOU, Dominique**
**91191 Gif sur Yvette Cedex (FR)**

(74) Mandataire: **Brevalex**
**Tour Trinity**
**1 B Place de la Défense**
**92400 Courbevoie (FR)**

(56) Documents cités:
**WO-A1-2013/093382     US-A- 4 526 626**
**US-A1- 2008 075 886**

**Description**

## DOMAINE TECHNIQUE

Le domaine de l'invention est celui des procédés de traitement du circuit primaire d'un réacteur nucléaire utilisant l'eau comme caloporteur.

L'invention traite en particulier de l'amélioration du comportement des pièces métalliques du circuit primaire, telles que les tubes des générateurs de vapeur, les pompes et les robinetteries du circuit primaire des réacteurs nucléaires, vis-à-vis du relâchement des produits de corrosion responsable de la contamination du circuit primaire.

## ÉTAT DE LA TECHNIQUE ANTÉRIEURE

Dans un réacteur nucléaire utilisant l'eau comme caloporteur, l'eau circule au sein d'un circuit fermé (appelé circuit primaire) qui traverse le cœur du réacteur et un générateur de vapeur. Le circuit primaire comporte également d'autres pièces métalliques, tels que des pompes primaires (i.e. des pompes du circuit primaire, ci-après « pompes »), des robinetteries (vannes, etc.) et des tuyauteries de circulation de l'eau.

Dans la cuve du réacteur en fonctionnement, l'eau du circuit primaire récupère la chaleur produite par les réactions nucléaires de fission du combustible nucléaire. Elle est alors généralement à une température comprise entre 286°C et 330°C.

Il est à noter que, dans le présent exposé, l'expression « compris entre ... et ... » doit être comprise comme incluant les bornes.

À l'aide de pompes, l'eau du circuit primaire quitte la cuve du réacteur et pénètre dans les tubes du générateur de vapeur. Dans ces tubes, elle échange sa chaleur avec l'eau d'un autre circuit, dit circuit secondaire, afin de générer de la vapeur qui entraîne un groupe turbo-alternateur destiné à produire de l'électricité.

Les conditions élevées de température et de pression de l'eau du circuit primaire provoquent notamment la corrosion généralisée de l'alliage constituant les tubes du générateur de vapeur.

L'alliage des tubes du générateur de vapeur contient généralement un pourcentage en poids de nickel compris entre 60 % et 75 % ; sa corrosion aboutit donc au rejet de l'élément nickel dans l'eau du circuit primaire, par dissolution d'une partie des produits de corrosion.

Lorsque l'eau du circuit primaire circule ensuite dans le cœur du réacteur, le nickel est irradié et produit du cobalt 58 ($^{58}$Co) radioactif, qui peut à son tour contaminer l'ensemble du circuit primaire (dont le générateur de vapeur), par incorporation du cobalt dans la couche que forment les produits de corrosion.

Le même mécanisme de transfert se produit entre l'eau du circuit primaire et les alliages à base cobalt qui sont utilisés dans la robinetterie et les pompes du circuit primaire. En effet, il se produit un rejet de l'élément cobalt dans l'eau du circuit primaire, par dissolution d'une partie des produits de corrosion de ces alliages à base cobalt.

Lorsque l'eau du circuit primaire circule ensuite dans le cœur du réacteur, le cobalt est irradié et produit du cobalt 60 ($^{60}$Co) radioactif, qui peut à son tour contaminer l'ensemble du circuit primaire (dont le générateur de vapeur), par incorporation du cobalt dans la couche que forment les produits de corrosion.

Or, avant d'effectuer des interventions de rechargement du combustible nucléaire et de maintenance périodiques sur le circuit primaire et sur le générateur de vapeur, l'exploitant du réacteur nucléaire doit veiller à ce que la radioactivité ait suffisamment diminué. Cette contamination du circuit primaire se traduit par une augmentation du temps d'attente pour la diminution de la radioactivité, et donc par une perte de temps et donc de revenus d'exploitation importante.

Il convient donc de limiter la quantité de cobalt 58 et 60 au sein du circuit primaire, en évitant au mieux de rejeter, d'une part, du nickel dans l'eau du circuit primaire par corrosion de l'alliage constitutif des tubes du générateur de vapeur et, d'autre part, du cobalt dans l'eau du circuit primaire par corrosion de l'alliage constitutif des pompes et de la robinetterie du circuit primaire.

Dans la demande de brevet WO 2013/093382 A1, la Demanderesse a proposé un procédé de traitement permettant de limiter à la source le rejet, dans le circuit primaire, de nickel issu de la corrosion d'un tube de générateur de vapeur, afin de limiter la contamination qui s'ensuit par les cobalts radioactifs.

Ce procédé de traitement de la surface interne d'un tube de générateur de vapeur d'un réacteur nucléaire refroidi par eau, comprend une étape préalable de formation d'une eau traitée obtenue par introduction, dans l'eau du circuit primaire du réacteur lorsque l'eau a une température comprise entre 80°C et 180°C, d'une quantité de magnétite ($Fe_3O_4$), et une étape de mise en circulation de cette eau traitée dans le circuit primaire, de façon à mettre l'eau traitée en contact avec la surface interne du tube de générateur de vapeur, moyennant quoi l'eau traité forme, sur la surface interne, une couche d'un oxyde protecteur permettant de fixer tout ou partie de la quantité de nickel susceptible d'être rejetée dans le circuit primaire par l'alliage constitutif du tube de générateur de vapeur au cours d'un cycle de fonctionnement du réacteur.

La quantité de magnétite introduite dans l'eau du circuit primaire est donc choisie de manière à ce que l'eau traitée permette de former, sur la surface interne du tube, une couche d'un oxyde protecteur permettant de fixer tout ou partie du nickel susceptible d'être rejeté dans le circuit primaire par l'alliage constitutif du tube de générateur de vapeur pendant un cycle de fonctionnement du réacteur.

Cependant, ce procédé, bien que performant, perd en efficacité au cours du temps.

En effet, de manière connue, le fluide primaire est purifié en permanence. Plus précisément, une portion de l'eau circulant dans le circuit primaire (fluide primaire) est déviée dans un circuit auxiliaire dit de contrôle chimique et volumétrique (RCV), qui est disposé adjacent au circuit primaire et qui permet notamment, à l'aide de moyens de purification (filtres mécaniques et de déminéraliseurs garnis de résines échangeuses d'ions), de purifier (épurer) l'eau du circuit primaire.

Ainsi, la quantité de $Fe_3O_4$ qui est introduite au début du cycle de fonctionnement (à savoir au démarrage du réacteur, période pendant laquelle l'eau a une température comprise entre 80°C et 180°C) va diminuer progressivement au cours du temps, à cause de l'action de purification du circuit RCV durant le cycle de fonctionnement du réacteur, le rôle du RCV étant, entre autres, d'éliminer les produits de corrosion solubilisés dans l'eau du circuit primaire, y compris la magnétite introduite volontairement.

## EXPOSÉ DE L'INVENTION

Les Inventeurs se sont fixé comme but d'améliorer le procédé de la Demanderesse en proposant un procédé de traitement permettant de limiter encore mieux, à la source, le rejet dans le circuit primaire de nickel issu de la corrosion d'un tube de générateur de vapeur ou de cobalt issu de la corrosion des pompes et robinetteries du circuit primaire, afin de limiter la contamination qui s'ensuit par le cobalt 60 et le cobalt 58, provenant respectivement de l'activation du cobalt et du nickel.

De manière plus générale, le but de l'invention est de réduire le relâchement des produits de corrosion dans l'eau du circuit primaire, qui sont responsables du transfert de contamination dans le réacteur nucléaire. Les éléments chimiques ciblés sont principalement le nickel et le cobalt, et dans une moindre mesure le chrome.

La présente invention concerne ainsi un procédé de traitement, au cours d'un cycle de fonctionnement, d'une surface interne d'au moins une pièce métallique d'un circuit primaire d'un réacteur nucléaire refroidi par eau, la pièce métallique étant en un alliage à base nickel ou à base cobalt choisie parmi un tube de générateur de vapeur, une pompe ou une robinetterie,

le procédé comprenant :

-   une estimation d'une quantité de nickel susceptible d'être rejetée dans le circuit primaire par l'ensemble des pièces métalliques du circuit primaire au contact de l'eau du circuit primaire, au cours d'un cycle de fonctionnement du réacteur ;
-   un calcul d'une quantité de magnétite nécessaire pour fixer la totalité de la quantité de nickel estimée ;
-   une formation d'une eau traitée obtenue par dissolution de la quantité de magnétite calculée dans l'eau du circuit primaire lorsque l'eau a une température comprise entre 80°C et 180°C ; et
-   une mise en circulation de cette eau traitée dans le circuit primaire de manière à former, sur la surface interne d'au moins une pièce métallique, une couche d'un oxyde protecteur apte à fixer tout ou partie de la quantité de nickel estimée ;

et dans lequel, une portion de l'eau traitée circulant dans le circuit primaire étant purifiée en continu, au cours du cycle de fonctionnement, en étant déviée dans un circuit auxiliaire comprenant des moyens de purification puis réinjectée dans le circuit primaire, le procédé comprend en outre une injection, dans ce circuit auxiliaire et en aval des moyens de purification, d'une solution de fer aqueux (Fe (II)), de manière à compenser la quantité de fer retirée de l'eau traitée épurée par les moyens de purification.

Pour rappel, le fonctionnement d'un réacteur nucléaire refroidi par eau s'effectue par cycles qui durent entre un an et deux ans, et entre lesquels le réacteur est mis à l'arrêt pour déchargement du combustible usé, puis rechargement en combustible neuf. Un cycle de fonctionnement complet comprend notamment une phase de démarrage (où la température est en dessous de 180°C), une phase de stabilisation à la température d'arrêt à chaud à 280°C et une phase de fonctionnement en puissance (période de production d'électricité), où la température varie entre 286°C et 330°C avec un conditionnement chimique du circuit primaire bien défini suivant des spécifications déclarées à l'autorité de sûreté nucléaire (l'eau du circuit primaire contient alors de l'acide borique, de la lithine et du dihydrogène dans des limites qui sont variables en fonction de l'épuisement du combustible nucléaire, mais qui sont parfaitement établies).

Les pièces métalliques de robinetterie peuvent être une vanne ou un palier de pompe, par exemple.

L'injection du fer aqueux a lieu tout au long du cycle de fonctionnement ; l'injection peut être continue ou discontinue (mais périodique). Cette injection permet de compenser les pertes en fer.

Dans le cadre de la présente invention, on parle indifféremment de « solution aqueuse de fer », de « solution de fer aqueux » ou de « fer aqueux » ; on entend par cela une solution aqueuse contenant du fer dissout, le fer ayant un degré d'oxydation +2. L'espèce chimique contenant le fer au degré d'oxydation +2 peut être très variée : hydroxydes, acétates ou autres de fer(II). Ainsi, le fer sous forme aqueuse Fe(II) peut être introduit dans une solution aqueuse sous forme complexée à une espèce d'origine organique, par exemple un acétate de fer ou un hydroxyde de fer.

L'utilisation de fer sous forme aqueuse (Fe(II)) est particulièrement avantageuse, car le fer sous forme aqueuse (Fe(II)) agit non seulement sur les alliages à base nickel (tubes du générateur de vapeur), mais également sur les alliages à base cobalt qui sont utilisés dans les pompes et la robinetterie (vannes, paliers de pompe, etc.) du circuit primaire. Ce qui est particulièrement avantageux puisque le cobalt, lui aussi, s'active sous l'effet des neutrons dans le cœur du réacteur.

L'injection initiale de $Fe_3O_4$, suivie d'une injection (continue ou discontinue), durant toute la durée du cycle de fonctionnement, de fer II aqueux, ont pour effet de diminuer les concentrations des cobalts $^{58}$Co et [60]Co.

De préférence, l'injection est réalisée à une température de l'eau traitée purifiée qui est comprise entre 20°C et 120°C. Cela permet de faciliter le mélange du fer aqueux avec le fluide primaire et de limiter les phénomènes de précipitations.

De préférence, l'eau du circuit primaire au cours de la formation de l'eau traité présente une température comprise entre 80°C et 120°C.

Avantageusement, la magnétite est introduite sous forme de poudre.

Avantageusement, la durée de fonctionnement du réacteur est de 12 mois à 24 mois.

Avantageusement, l'alliage à base nickel est constitué d'un alliage comprenant au moins 60% en poids de nickel et l'alliage à base cobalt est constitué d'un alliage comprenant au moins 60% en poids de cobalt. De préférence, l'alliage est choisi parmi les alliages A600 et A690 pour les alliages base nickel, et parmi les alliages Stellite™ (sans distinction dans la famille de ces alliages à base cobalt) pour les alliages base cobalt.

Selon un mode de réalisation de l'invention, la quantité en moles de magnétite introduite dans l'eau du circuit primaire est d'au moins deux fois la quantité en moles de nickel susceptible d'être rejeté.

Avantageusement, la quantité en moles de magnétite introduite dans l'eau du circuit primaire est d'au moins 20 moles.

## BRÈVE DESCRIPTION DES DESSINS

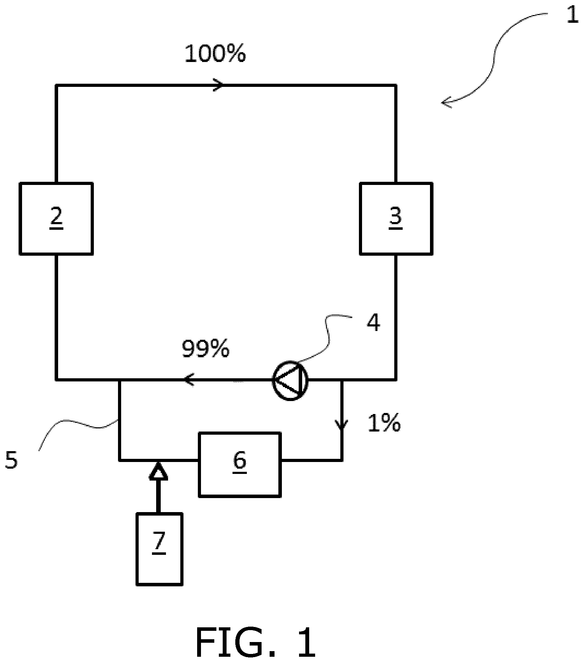

D'autres aspects, buts, avantages et caractéristiques de l'invention apparaîtront mieux à la lecture de la description détaillée suivante d'une forme de réalisation préférée de celle-ci, donnée à titre d'exemple non limitatif, et faite en référence à la figure 1 (qui est l'unique figure) annexée :

- la figure 1 est une représentation schématique d'un circuit primaire selon l'invention.

## EXPOSÉ DÉTAILLÉ DE MODES DE RÉALISATION PARTICULIERS

Le procédé de traitement selon l'invention exploite avantageusement le fait que la magnétite (qui possède une structure de type spinelle) contient le fer sous deux degrés d'oxydation Fe(II) et Fe(III). Cette particularité lui permet de s'associer avec les éléments nickel, fer et chrome contenus dans l'alliage du tube générateur de vapeur, ainsi qu'avec l'élément cobalt (issu de l'irradiation du nickel, avant la mise en œuvre du procédé de traitement de l'invention, ou présent dans les alliages formant la robinetterie et les pompes du circuit primaire), afin de former :

- sur la surface interne du tube de générateur de vapeur, une couche d'un oxyde protecteur de structure de type spinelle de formule générale simplifiée $AB_2O_4$, A étant choisi parmi Ni(II), Fe(II) et Co(II), et B étant choisi parmi Fe(III) et Cr(III) ; et
- sur la surface interne des pièces métalliques du circuit primaire en alliage à base cobalt (pompes, robinetterie), une couche d'un oxyde protecteur de structure de type spinelle de formule générale simplifiée $AB_2O_4$, A étant choisi parmi Co(II) et Fe(II), et B étant du Fe(III).

À titre d'exemple, on peut donc former une couche protectrice d'un oxyde mixte de formule brute $Ni_xFe_{1-x}Fe_{2y}Cr_{2(1-y)}O_4$, par exemple une couche $NiFe_2O_4$, ou une couche $FeCr_2O_4$, sur la surface interne d'un tube de générateur de vapeur (par exemple un tube en alliage A600 ou A690), et une couche protectrice de $CoFe_2O_4$ sur la surface interne de la robinetterie et des pompes (par exemple réalisées en alliage de Stellite™ de grade 4).

La couche d'oxyde relativement insoluble qui est formée constitue une barrière qui limite, voire évite, le rejet de nickel (provenant de la corrosion du tube) et le rejet de cobalt (provenant de la corrosion de la robinetterie et de la pompe) dans l'eau du circuit primaire.

La présence de cette ou de ces couches d'oxyde permet une réduction de la durée de la mise en arrêt à froid des réacteurs nucléaires, et en conséquence, une réduction de la dosimétrie individuelle du personnel opérant sur les réacteurs nucléaires durant les opérations de maintenances.

Comme indiqué dans la demande de brevet antérieure WO 2013/093382 A1 de la Demanderesse, l'introduction de la magnétite lorsque la température de l'eau du circuit primaire est comprise entre 80°C et 180°C (éventuellement entre 80°C et 120°C) est un point essentiel à la réussite du traitement.

De manière connue, on travaille en milieu basique et réducteur dans le fluide du circuit primaire lors du fonctionnement normal du réacteur et des arrêts à chaud, ce qui permet de minimiser la corrosion généralisée. Généralement, le fluide primaire contient ainsi de l'acide borique, de la lithine et du dihydrogène dissous. Plus précisément, l'eau du circuit primaire constitue un milieu réducteur grâce à l'ajout de dihydrogène selon une concentration qui est généralement de 25 mL/kg à 50 mL/kg (à 0°C, 1 bar). Tous les réacteurs de technologie REP utilise de l'hydrogène sous forme $H_2$ pour lutter contre la radiolyse du fluide primaire. Dans un tel milieu, la magnétite a la particularité d'être plus soluble à une température comprise entre 80°C et 180°C, qu'à la température de fonctionnement nominal du réacteur, à savoir typiquement une température comprise entre 286°C et 330°C.

La température limite inférieure de 80°C est nécessaire pour éviter la formation d'hydroxyde ferreux $Fe(OH)_2$. En effet, à des températures inférieures à cette limite basse, la formation du spinelle protecteur sur les alliages est compromise et la compacité des oxydes formés n'est généralement pas bonne. Quant à la température limite supérieure de 180°C (voire de 120°C), elle correspond à une température limite précédant la montée en température du réacteur en fonctionnement nominal. Pour rappel, un cycle de fonctionnement complet comprend une phase de démarrage (qui dure quelques jours), une phase de stabilisation à la température d'arrêt à chaud (qui dure également quelques jours), une phase de fonctionnement normal (qui dure plusieurs mois et durant laquelle la centrale produit de l'électricité), puis pour finir, une phase de mise à l'arrêt de l'installation pour remplacer le combustible nucléaire usagé.

En pratique, la magnétite est donc généralement introduite dans l'eau du circuit primaire lorsque le réacteur nucléaire est à l'arrêt, typiquement avant la divergence du réacteur. Elle se dissout alors en tout ou partie dans l'eau du circuit primaire. Après circulation dans le circuit primaire, la magnétite contenue dans l'eau ainsi traitée peut alors être mise en contact par voie aqueuse avec la surface interne d'une pièce métallique du réacteur choisie parmi un tube de générateur de vapeur, une pompe ou une robinetterie, afin d'y former la couche d'oxyde protecteur.

Le procédé de traitement selon l'invention est destiné à être mis en œuvre sur un circuit primaire d'un réacteur nucléaire refroidi par eau, par exemple de type réacteur à eau pressurisée (REP). La magnétite peut être introduite dans toute partie du circuit primaire où la température est comprise entre 80°C et 180°C, au début d'un cycle de fonctionnement, à savoir pendant la phase de (re)démarrage du réacteur nucléaire. À titre d'exemples, la magnétite peut être introduite dans l'eau du circuit primaire du réacteur via une pompe doseuse, en sortie du circuit RCV, ou bien être placée dans un filtre du circuit primaire en sortie du circuit RCV.

La magnétite est par exemple introduite sous forme de poudre, afin de favoriser sa dissolution.

La quantité de magnétite introduite dans l'eau du circuit primaire est telle qu'elle permet de former *in situ* une couche d'un oxyde protecteur, sur une ou plusieurs pièces métalliques du circuit primaire en alliage à base nickel ou cobalt, permettant de fixer tout ou partie du nickel ou du cobalt susceptibles d'être rejetés dans le circuit primaire par les pièces métalliques à base nickel du circuit primaire ou à base cobalt du circuit primaire, pendant la durée d'un cycle de fonctionnement du réacteur. Pour caractériser la couche d'oxyde et pour estimer la quantité de magnétite à introduire, on considère la quantité de nickel, et non la quantité de cobalt ou de chrome, car ces deux espèces sont en fait minoritaires et très variables dans le bilan de masse des espèces rejetées dans le circuit primaire. Elles peuvent donc être toujours négligées dans le calcul de la masse de fer(II) à injecter dans le circuit primaire.

Afin de déterminer au préalable la quantité de magnétite à introduire dans l'eau du circuit primaire pour une durée de fonctionnement déterminée, on peut mesurer la teneur en nickel dans l'eau du circuit primaire sur la même période de fonctionnement, à l'aide par exemple d'une technique telle qu'un dosage chimique ou potentiométrique ou utiliser les relevés radiochimiques de l'installation industrielle durant les arrêts du réacteur, c'est-à-dire mesurer l'aire des pics de radioactivité en cobalt 58 et 60 pour estimer la masse de Ni et Co libérées durant l'arrêt.

De façon alternative, la valeur de la quantité de nickel susceptible d'être rejeté est calculée en comparant la hauteur du pic de radioactivité observée lors de la mise à l'arrêt du réacteur avec le ratio du nickel donnant le rapport entre la concentration de nickel et la radioactivité totale véhiculée par l'eau du circuit primaire (les ratios par élément chimique sont des valeurs connues de l'homme de métier et déclarées par l'exploitant à l'autorité de sûreté nucléaire). Connaissant le ratio du nickel (ratio_Ni) et en mesurant la radioactivité totale de l'eau du circuit primaire lors de l'arrêt du réacteur, il est possible d'estimer la concentration du nickel présente dans l'eau du circuit primaire par le calcul suivant :

Radioactivité_totale $\times$ ratio_Ni = concentration du nickel

Connaissant le volume d'eau du circuit primaire, on peut alors calculer la quantité totale de nickel qu'il faut fixer sur les couches d'oxyde protecteur par le calcul suivant :

concentration du Ni $\times$ volume du circuit primaire = quantité de Ni

La durée de fonctionnement séparant deux mises à l'arrêt du réacteur (i.e. cycle de fonctionnement) est généralement de 12 mois à 24 mois, préférentiellement de 18 mois.

Un tube de générateur de vapeur est quant à lui typiquement constitué d'un alliage comprenant au moins 60 % en poids de nickel, préférentiellement de 60 % à 75 %. Il s'agit par exemple d'un alliage choisi parmi l'alliage A600 ou A690.

Il résulte de ces paramètres que la quantité de nickel rejeté suite à la corrosion du tube générateur de vapeur est alors en général, après 18 mois de fonctionnement du réacteur, respectivement d'au moins 10 moles, préférentiellement de 20 moles à 50 moles.

La quantité en moles de magnétite à introduire dans l'eau du circuit primaire est déterminée en considérant qu'elle correspond à au moins deux fois la quantité en moles de nickel susceptible d'être rejetée. Elle est ainsi en général respectivement d'au moins 20 moles (4,6 kg de magnétite), préférentiellement de 40 moles (9,2 kg de magnétite) à 100 moles (23 kg de magnétite).

Comme nous l'avons expliqué plus haut, la quantité de magnétite introduite dans le circuit primaire diminue au cours du temps. En effet, une petite fraction (typiquement moins de 1%) du débit d'eau du circuit primaire est déviée vers un circuit auxiliaire RCV contenant des moyens de purification qui vont éliminer les espèces chimiques (espèces aqueuses et solides) transportées par l'eau. En fait, tous les éléments Fe, Ni, Co, etc. sont épurés de la portion du fluide primaire qui passe dans le circuit RCV.

Approximativement en une centaine d'heures, le fluide primaire est entièrement passé dans le circuit de purification du RCV. La perte en fer sera, à chaque renouvellement du fluide primaire, de :

$$masse\_fer\_perte = concentration\_équilibre \times masse\_eau\_primaire$$

où « masse_fer_perte » est la masse de fer retenue par les moyens de purification à chaque renouvellement complet du fluide primaire (en kg) (donc par centaine d'heures), « concentration_équilibre » est la concentration moyenne d'équilibre de la magnétite dans les conditions physico-chimiques rencontrées durant le fonctionnement en puissance de réacteur (en $kg/kg_{eau}$)) et « masse_eau_primaire » est la masse d'eau contenue dans le circuit primaire en fonctionnement (en kg).

Sachant que « concentration_équilibre » est égale à $9 \times 10^{-8}$ $mol/kg_{eau}$ ou $5 \times 10^{-9}$ $kg/kg_{eau}$ (varie de moins d'un facteur 2 sur l'ensemble des conditions physico-chimiques rencontrées durant le fonctionnement en puissance de réacteur) et que « masse_eau_primaire » est égale à $300 \times 10^3$ kg (variant suivant la conception et la puissance du réacteur), la perte en fer, à chaque renouvellement du fluide primaire, est ainsi d'environ 0,027 mole, soit 1,51 g. La perte de fer, du fait de la purification du fluide primaire, sur un cycle de 18 mois, est donc de (365 jours/12 mois) $\times$ 18 mois $\times$ (24 heures/jour) /100 $h_{purification}$ = 131 renouvellements complets par purification, soit de l'ordre de 0,2 kilogramme de fer (ou 3,58 mol de fer) perdu dans l'eau du circuit primaire sur la totalité de la durée d'un cycle de fonctionnement du réacteur. La perte de fer dépend directement du débit de purification. Cependant, elle reste de l'ordre du kilogramme par cycle de fonctionnement.

L'amélioration du procédé existant consiste à compenser les pertes de magnétite volontairement introduite, pertes induites par les moyens de purification de l'eau, en injectant du fer aqueux dans le circuit RCV à la sortie des moyens de purification, compensant ainsi les pertes en fer. La portion épurée du fluide primaire est donc bien débarrassée des éléments indésirables, tout en conservant la quantité de fer nécessaire à la constitution des couches d'oxyde protecteur.

Ce processus de purification d'une portion de l'eau primaire est en action durant tout le cycle de fonctionnement du réacteur. L'amélioration du procédé consiste donc à compenser les pertes de l'élément fer en l'introduisant volontairement, et en continu ou de manière discontinue, dans l'eau purifiée qui retourne dans le circuit primaire.

L'injection de fer sous forme de fer aqueux au cours du cycle de fonctionnement a l'avantage d'être plus aisée à réaliser que l'introduction de magnétite, car la quantité de fer à compenser par cette injection au cours du cycle de fonctionnement est bien plus faible que la quantité de fer initialement injectée au démarrage du réacteur. En outre, il est plus facile d'injecter du fer au besoin et en petites quantités au cours du temps, qu'en une seule fois en grande quantité, car il s'agit ici de compenser une faible perte de fer induite par le fonctionnement du circuit RCV, sachant que l'injection initiale de fer (sous forme de magnétite) aurait, en théorie, dû suffire à bloquer le nickel et le cobalt sur leurs sources d'origines.

La quantité totale de fer aqueux à introduire au cours d'un cycle pour compenser les pertes en fer dépend de la quantité de fluide primaire épuré par le circuit RCV, et donc du débit de purification $Q_{purification}$ selon la formule suivante :

$$Q_{injection}(Fe) \times C_{appoint}(Fe) = Q_{purification} \times C_{solubilité}(magnétite)$$

où $Q_{injection}(Fe)$ est le débit du système d'injection utilisé pour réaliser l'injection de la solution de fer aqueux (Fe (II), $C_{appoint}(Fe)$ est la concentration de fer de la solution de fer aqueux (Fe (II) injectée, $Q_{purification}$ est le débit du circuit RCV et $C_{solubilité}(magnétite)$ est la solubilité moyenne de la magnétite dans les conditions physico-chimiques des REP.

Sachant que $C_{solubilité}(magnétite)$ est comprise entre $[2 à 8].10^{-9}$ kg de fer par kg d'eau, que $Q_{purification}$ est égal à environ 10 tonnes par heure ($10.10^3$ kg/h) pour une déviation d'environ 1% du débit d'eau primaire dans le circuit RCV, et que la durée de cycle de 18 mois correspond à (365 jours $\times$ 24 heures $\times$ 18/12), soit 13140 heures, si on prend la valeur de

$C_{solubilité}$(magnétite) égale à $5.10^{-9}$ kg de fer par kg d'eau, on obtient une perte de 0,657 kg de fer pour un cycle de 18 mois.

En somme, il faut donc introduire l'équivalent d'un peu moins de 1 kg de fer supplémentaire par cycle de fonctionnement de 18 mois (à ajuster en fonction du débit de purification utilisé et de la durée du cycle de fonctionnement).

Un exemple de représentation schématique d'un circuit primaire 1 d'un réacteur nucléaire refroidi par eau selon l'invention est représenté dans la figure 1. Il comporte un cœur de réacteur 2, un générateur de vapeur 3, une pompe 4 et un circuit RCV 5 ayant des moyens de purification 6. On a ici représenté le cas d'une déviation d'1% du débit de l'eau primaire dans le circuit RCV. Dans le circuit RCV 5 à la sortie des moyens de purification 6, on injecte une quantité de fer aqueux à l'aide de moyens d'injection 7 pour compenser la perte de fer.

L'injection du fer aqueux se fait en aval des moyens de purification du circuit auxiliaire. De préférence, l'injection se fait dans une zone du circuit RCV, non seulement située en aval des moyens de purification, mais également où la température du fluide primaire est comprise entre 20°C et 120°C. Cela permet de faciliter son mélange avec le fluide primaire et de limiter les phénomènes de précipitations qui peuvent apparaitre au-dessus de 120°C si le mélange de la solution injectée avec l'eau du circuit primaire n'est pas suffisant.

De manière connue et comme précisé précédemment, le fluide du circuit primaire durant le fonctionnement normal du réacteur est un milieu basique et réducteur. De préférence, la solution de fer aqueux injectée est elle aussi un milieu réducteur, afin de ne pas perturber le conditionnement chimique imposé au circuit primaire (pH et redox). La solution aqueuse de fer Fe(II) peut par exemple être préparée en l'absence d'$O_2$, donc sous vide, ou mieux, dans une eau contenant du dihydrogène dissous, par exemple en ajoutant de l'hydrogène selon une concentration comprise entre 5 mL/kg et 50 mL/kg (à 0°C, 1 bar).

## Revendications

**1.** Procédé de traitement, au cours d'un cycle de fonctionnement, d'une surface interne d'au moins une pièce métallique d'un circuit primaire d'un réacteur nucléaire refroidi par eau, la pièce métallique étant en un alliage à base nickel ou à base cobalt choisie parmi un tube de générateur de vapeur, une pompe ou une robinetterie,

le procédé comprenant :

- une estimation d'une quantité de nickel susceptible d'être rejetée dans le circuit primaire par l'ensemble des pièces métalliques du circuit primaire au contact de l'eau du circuit primaire, au cours d'un cycle de fonctionnement du réacteur ;
- un calcul d'une quantité de magnétite nécessaire pour fixer la totalité de la quantité de nickel estimée ;
- une formation d'une eau traitée obtenue par dissolution de la quantité de magnétite calculée dans l'eau du circuit primaire lorsque l'eau a une température comprise entre 80°C et 180°C ; et
- une mise en circulation de cette eau traitée dans le circuit primaire de manière à former, sur la surface interne d'au moins une pièce métallique, une couche d'un oxyde protecteur apte à fixer tout ou partie de la quantité de nickel estimée ;

et dans lequel, une portion de l'eau traitée circulant dans le circuit primaire étant purifiée en continu, au cours du cycle de fonctionnement, en étant déviée dans un circuit auxiliaire comprenant des moyens de purification puis réinjectée dans le circuit primaire, le procédé comprend en outre une injection, dans ce circuit auxiliaire et en aval des moyens de purification, d'une solution de fer aqueux (Fe (II)), de manière à compenser la quantité de fer retirée de l'eau traitée épurée par les moyens de purification.

**2.** Procédé selon la revendication 1, dans lequel l'injection est réalisée à une température de l'eau traitée purifiée comprise entre 20°C et 120°C.

**3.** Procédé selon la revendication 1 ou la revendication 2, dans lequel l'eau du circuit primaire au cours de la formation de l'eau traité présente une température comprise entre 80°C et 120°C.

**4.** Procédé de traitement selon l'une quelconque des revendications 1 à 3, dans lequel la magnétite est introduite sous forme de poudre.

**5.** Procédé de traitement selon l'une quelconque des revendications 1 à 4, dans lequel la durée de fonctionnement du réacteur est de 12 mois à 24 mois.

**6.** Procédé de traitement selon l'une quelconque des revendications 1 à 5, dans lequel l'alliage à base nickel est constitué d'un alliage comprenant au moins 60 % en poids de nickel et l'alliage à base cobalt est constitué d'un alliage comprenant au moins 60% en poids de cobalt.

7. Procédé de traitement selon la revendication 6, dans lequel l'alliage est choisi parmi les alliages A600 et A690 pour les alliages base nickel, et parmi les alliages Stellite™ pour les alliages base cobalt.

8. Procédé de traitement selon l'une quelconque des revendications 1 à 7, dans lequel la quantité en moles de magnétite introduite dans l'eau du circuit primaire est d'au moins deux fois la quantité en moles de nickel susceptible d'être rejeté.

9. Procédé de traitement selon la revendication 8, dans lequel la quantité en moles de magnétite introduite dans l'eau du circuit primaire est d'au moins 20 moles.

**Patentansprüche**

1. Verfahren zur Behandlung einer inneren Oberfläche von mindestens einem Metallteil eines Primärkreislaufs eines wassergekühlten Kernreaktors während eines Betriebszyklus, wobei das Metallteil aus einer Legierung auf Nickelbasis oder Kobaltbasis besteht, das aus einem Dampferzeugerrohr, einer Pumpe oder einer Armatur ausgewählt wird,

wobei das Verfahren Folgendes umfasst:

- Schätzen einer Menge an Nickel, die dazu geeignet ist, während eines Betriebszyklus des Reaktors von allen Metallteilen des Primärkreislaufs, die mit dem Wasser des Primärkreislaufs in Kontakt stehen, in den Primärkreislauf abgegeben zu werden;
- Berechnen einer Menge an Magnetit, die zum Festsetzen der gesamten geschätzten Menge an Nickel erforderlich ist;
- Bilden eines behandelten Wassers, das durch Auflösen der berechneten Menge an Magnetit im Wasser des Primärkreislaufs erhalten wird, wenn das Wasser eine Temperatur zwischen 80 °C und 180 °C hat; und
- Zirkulieren des behandelten Wassers im Primärkreislauf, um auf der inneren Oberfläche mindestens eines Metallteils eine Schicht aus schützendem Oxid zu bilden, die dazu ausgelegt ist, die geschätzte Menge an Nickel ganz oder teilweise zu festzusetzen;

und wobei ein Teil des im Primärkreislauf zirkulierenden behandelten Wassers während des Betriebszyklus kontinuierlich gereinigt wird, während es in einen Hilfskreislauf, der Reinigungsmittel umfasst, umgeleitet und dann wieder in den Primärkreislauf eingespeist wird, wobei das Verfahren ferner das Einspeisen einer wässrigen Eisenlösung (Fe(II)) in den Hilfskreislauf und den Reinigungsmitteln nachgelagert umfasst, um die Menge an Eisen zu kompensieren, die aus dem gereinigten behandelten Wasser durch die Reinigungsvorrichtung entfernt wurde.

2. Verfahren nach Anspruch 1, wobei das Einspeisen bei einer Temperatur des gereinigten behandelten Wassers zwischen 20 °C und 120 °C durchgeführt wird.

3. Verfahren nach Anspruch 1 oder Anspruch 2, wobei das Wasser des Primärkreislaufs während des Bildens des behandelten Wassers eine Temperatur zwischen 80 °C und 120 °C aufweist.

4. Behandlungsverfahren nach einem der Ansprüche 1 bis 3, wobei der Magnetit in Pulverform eingebracht wird.

5. Behandlungsverfahren nach einem der Ansprüche 1 bis 4, wobei die Betriebsdauer des Reaktors 12 Monate bis 24 Monate beträgt.

6. Behandlungsverfahren nach einem der Ansprüche 1 bis 5, wobei die Legierung auf Nickelbasis aus einer Legierung besteht, die mindestens 60 Gew.-% Nickel umfasst, und die Legierung auf Kobaltbasis aus einer Legierung besteht, die mindestens 60 Gew.-% Kobalt umfasst.

7. Behandlungsverfahren nach Anspruch 6, wobei die Legierung aus den Legierungen A600 und A690 für die Legierungen auf Nickelbasis und aus den Stellite™-Legierungen für die Legierungen auf Kobaltbasis ausgewählt wird.

**8.** Behandlungsverfahren nach einem der Ansprüche 1 bis 7, wobei die molare Menge an Magnetit, die in das Wasser des Primärkreislaufs eingebracht wird, mindestens doppelt so groß ist wie die molare Menge an Nickel, die dazu geeignet ist, abgegeben zu werden.

**9.** Behandlungsverfahren nach Anspruch 8, wobei die molare Menge an Magnetit, die in das Wasser des Primärkreislaufs eingebracht wird, mindestens 20 Mol beträgt.

**Claims**

**1.** Method for treating, during an operating cycle, an internal surface of at least one metal part of a primary circuit of a water-cooled nuclear reactor, the metal part being made from a nickel-based or cobalt-based alloy selected from a steam generator tube, a pump or a fitting,

   the method comprising:

   - an estimation of a quantity of nickel liable to be discharged into the primary circuit by all the metal parts of the primary circuit in contact with the water of the primary circuit, during an operating cycle of the reactor;
   - a calculation of a quantity of magnetite necessary for fixing the whole of the quantity of nickel estimated;
   - formation of a treated water obtained by dissolving the quantity of magnetite calculated in the water of the primary circuit when the water has a temperature of between 80°C and 180°C; and
   - putting this treated water in circulation in the primary circuit so as to form, on the internal surface of at least one metal part, a layer of a protective oxide able to fix all or part of the quantity of nickel estimated;

   and wherein, a portion of the treated water circulating in the primary circuit being purified continuously, during the operating cycle, while being diverted into an auxiliary circuit comprising purification means and then reinjected into the primary circuit, the method furthermore comprises an injection, into this auxiliary circuit and downstream of the purification means, of an aqueous iron solution (Fe(II)), so as to compensate for the quantity of iron removed from the purified treated water by the purification means.

**2.** Method according to claim 1, wherein the injection is implemented at a temperature of the purified treated water between 20°C and 120°C.

**3.** Method according to claim 1 or claim 2, wherein the water of the primary circuit during the formation of the treated water has a temperature of between 80°C and 120°C.

**4.** Treatment method according to any one of claims 1 to 3, wherein the magnetite is introduced in powder form.

**5.** Treatment method according to any one of claims 1 to 4, wherein the duration of operation of the reactor is 12 months to 24 months.

**6.** Treatment method according to any one of claims 1 to 5, wherein the nickel-based alloy consists of an alloy comprising at least 60% by weight nickel and the cobalt-based alloy consists of an alloy comprising at least 60% by weight cobalt.

**7.** Treatment method according to claim 6, wherein the alloy is selected from the A600 and A690 alloys for the nickel-based alloys, and from the Stellite™ alloys for the cobalt-based alloys.

**8.** Treatment method according to any one of claims 1 to 7, wherein the molar quantity of magnetite introduced into the water of the primary circuit is at least twice the molar quantity of nickel liable to be discharged.

**9.** Treatment method according to claim 8, wherein the molar quantity of magnetite introduced into the water of the primary circuit is at least 20 moles.

1

100%

2    3

4

99%

1%

5    6

7

FIG. 1

**EP 4 310 861 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013093382 A1